# EUROPÄISCHE PATENTSCHRIFT

(11) **EP 4 456 225 B1**
(45) Veröffentlichungstag und Bekanntmachung des Hinweises auf die Patenterteilung: **21.01.2026**
(21) Anmeldenummer: 23184281.6
(22) Anmeldetag: 07.07.2023
(51) Int. Cl.: H01M 10/04

(54) **VERFAHREN UND VORRICHTUNG ZUR BEREITSTELLUNG EINES ELEKTRODENSTRANGS SOWIE ZUR HERSTELLUNG EINER MONOZELLE UND EINES BATTERIESTAPELS**
METHOD AND DEVICE FOR PROVIDING AN ELECTRODE STRAND AND FOR PRODUCING A MONOCELL AND A BATTERY STACK
PROCÉDÉ ET DISPOSITIF DE FOURNITURE D'UN FAISCEAU D'ÉLECTRODES ET DE FABRICATION D'UNE MONOCELLULE ET D'UN EMPILEMENT DE BATTERIES

(30) Priorität: 27.04.2023 DE 102023110842
(43) Veröffentlichungstag der Anmeldung: 30.10.2024
(73) Patentinhaber: Grob-Werke GmbH & Co. KG, 87719 Mindelheim (DE)
(72) Erfinder: Paul, Jürgen, 87739 Loppenhausen (DE); Fritz, Alexander, 89297 Schießen (DE); Scherer, Florian, 87719 Mindelheim (DE); Pfitzmaier, Thomas, 86514 Ustersbach (DE)
(74) Vertreter: KASTEL Patentanwälte PartG mbB

(56) Entgegenhaltungen:
- WO-A1-2020/192845
- DE-A1- 102017 216 209

## Beschreibung

Die Erfindung betrifft ein Elektrodenstrangbereitstellverfahren zum Bereitstellen eines Elektrodenstrangs, der eine Separatorbahn und daran mit Abstand zueinander angebrachte Elektrodensegmente aufweist. Weiter betrifft die Erfindung ein Monozell-Herstellverfahren zum Herstellen von Monozellen für eine Batterie, bei dem Elektrodenstränge durch ein solches Elektrodenstrangbereitstellverfahren bereitgestellt werden. Weiter betrifft die Erfindung ein Batteriezellstapelherstellverfahren zum Herstellen eines Zellstapels für eine Batterie durch Aufstapeln von durch das Monozell-Herstellverfahren hergestellter Monozellen. Weiter betrifft die Erfindung eine Elektrodenstrangbereitstellvorrichtung zum Bereitstellen eines Elektrodenstrangs, der eine Separatorbahn und daran mit Abstand zueinander angebrachte Elektrodensegmente aufweist. Weiter betrifft die Erfindung eine Monozell-Herstellvorrichtung zum Herstellen einer Monozelle für eine Batterie, welche eine solche Elektrodenstrangbereitstelleinrichtung aufweist. Weiter betrifft die Erfindung eine Zellstapelherstellvorrichtung zum Herstellen eines Batteriezellstapels, welche eine derartige Monozell-Herstellvorrichtung umfasst. Schließlich betrifft die Erfindung weiter eine Steuerung und ein Computerprogramm für eine der vorgenannten Vorrichtungen.

Die Erfindung liegt insbesondere auf dem Gebiet der automatisierten und computergestützt gesteuerten Herstellung von Monozellen und Batteriestapeln aus derartigen Monozellen.

Zum technologischen Hintergrund wird auf folgende Literaturstellen verwiesen:
[1] WO 2020/192 845 A1
[2] DE 10 2017 216 156 A1
[3] DE 10 2017 216 209 A1

Aus [1] sind Verfahren und Vorrichtungen zur Bereitstellung von Elektrodensträngen sowie zur Herstellung von Monozellen und daraus gebildeten Batteriestapeln bekannt. Insbesondere beschreibt [1] eine Anlage zur Produktion von Batteriezellen, bei der als Elektrodenstränge ein Anodenstrang mit auf einem ersten bahnförmigen Separator (S) angebrachten Anoden (A) und ein Kathodenstrang mit auf einem zweiten bahnförmigen Separator (S) angebrachten Kathoden (K) bereitgestellt werden, wobei daraus ein Strangverbund gebildet wird, von dem Monozellen vereinzelt werden. Im Gegensatz zum Verfahren des Z-Faltens von Batteriezellen handelt es sich hierbei um einen kontinuierlichen Prozess. Der Vorteil liegt hierbei in der höheren Ausbringung aufgrund eines kontinuierlichen Verfahrens. Hierzu werden in der Anlage in der nachfolgenden Reihenfolge Separator, Anode, Separator, Kathode (SASK) miteinander laminiert. Durch Stapeln von vereinzelten SASK-Lagen entsteht die Grundlage der Batteriezelle.

In der Literaturstelle [2] wird ein Verfahren zur Herstellung von Monozellen beschrieben, bei dem der Separator zunächst auf ein Vakuumband angesaugt wird. Parallel hierzu werden Elektroden auf einer Trommel angesaugt und durch einen Laser vereinzelt. Die vereinzelte Elektrode wird auf den Separator übergeben und durch diesen hindurch auf das Vakuumband angesaugt. Hierauf wird ein zweiter Separator aufgebracht und anschließend an ein Transportsystem mit auf einer Führungsbahn einzeln beweglichen Transporteinheiten (zuweilen auch Moversystem genannt) übergeben. Hier wird die Separatorbahn geschnitten und eine weitere Elektrode, die wie die erste bereitgestellt wird, aufgelegt. Das Paket wird mechanisch geklemmt und zur Abwurfstelle transportiert. Aus [3] sind ein ähnliches Verfahren und eine ähnliche Vorrichtung wie in [2] beschrieben, wobei ein Elektrodenband auf einer Fördereinheit einer Fördereinrichtung mit aneinander angelenkten Fördersegmenten nach Art einer Kette aufgebracht wird, und dann in einem Bereich, in dem die Fördereinheit eine größere Krümmung aufweist, die auch unendlich sein kann, geschnitten wird. Die so vereinzelten Elektrodensegmente werden dann in einem Bereich, in dem die Fördereinheit eine kleinere Krümmung aufweist, so dass die Fördersegmente mehr zueinander abgewinkelt sind, auf einem Separator auf einer Transportvorrichtung abgelegt.

Die Erfindung hat sich zur Aufgabe gestellt, hinsichtlich Taktzeit und/oder Prozessführung verbesserte Verfahren und Vorrichtungen zur Bereitstellung von Elektrodensträngen sowie zur Herstellung von Monozellen und daraus gebildeten Batteriezellstapeln bereitzustellen.

Zum Lösen dieser Aufgabe schafft die Erfindung ein Elektrodenstrangbereitstellverfahren nach Anspruch 1. Ein Monozell-Herstellverfahren und ein Batteriezellstapelherstellverfahren, die ein solches Elektrodenstrangbereitstellverfahren beinhalten, sowie Vorrichtungen, mit denen sich derartige Verfahren durchführen lassen, sowie eine entsprechend eingerichtete Steuerung und ein Computerprogramm hierfür sind Gegenstand der Nebenansprüche.

Vorteilhafte Ausgestaltungen sind Gegenstand der Unteransprüche.

Die Erfindung schafft gemäß einem ersten Aspekt davon ein Elektrodenstrangbereitstellverfahren zum Bereitstellen eines Elektrodenstrangs, der eine Separatorbahn und daran mit Abstand zueinander angebrachte Elektrodensegmente aufweist, wobei das Elektrodenstrangbereitstellverfahren umfasst:
a) Bereitstellen eines bahnförmigen Elektrodensubstrats;
b) Aufnehmen des bahnförmigen Elektrodensubstrats mittels eines Transportsystems, das entlang einer Führungsbahn einzeln, unabhängig voneinander bewegbare Transporteinheiten aufweist, und ebenes Bewegen des Elektrodensubstrats entlang einer Schneidebene;
c) Schneiden des bahnförmigen Elektrodensubstrats in der Schneidebene, um Elektrodensegmente abzuschneiden, die jeweils einzeln auf einer der Transporteinheiten angeordnet sind;
d) Einstellen eines Abstands zwischen abgeschnittenen Elektrodensegmenten mittels einzeln gesteuerter Bewegung der Transporteinheiten, um die Elektrodensegmente relativ zueinander zu positionieren;
e) Bereitstellen einer Separatorbahn;
f) Aufbringen und Fixieren der relativ zueinander positionierten Elektrodensegmente auf der Separatorbahn.

Vorzugsweise umfasst Schritt b) den Schritt:
b1) Ansaugen der Elektrodenbahn an einer Aufnahmestelle auf den Transporteinheiten.

Vorzugsweise umfasst Schritt b) den Schritt:
b2) Transportieren der Elektrodenbahn mittels der Transporteinheiten zu einer Vereinzelungsstelle, wo eine ebene Oberfläche zum Schneiden als Schneidebene bereitgestellt wird.

Vorzugsweise umfasst Schritt b) den Schritt:
b3) Bereitstellen von Transporteinheiten mit austauschbaren Warenträgern, wobei die Warenträger entsprechend des herzustellenden Elektrodenformats aus einem Sortiment unterschiedlicher Warenträger ausgewählt werden.

Vorzugsweise umfasst Schritt b) den Schritt:
b4) Bereitstellen einer horizontalen Schneidebene und horizontales Bewegen entlang der Schneidebene.

Vorzugsweise umfasst Schritt b) den Schritt:
b5) Bereitstellen einer im Wesentlichen vertikalen Schneidebene und Bewegen entlang dieser Schneidebene.

Vorzugsweise umfasst Schritt c) den Schritt:
c1) Schneiden auf einer ebenen Oberfläche.

Vorzugsweise umfasst Schritt c) den Schritt:
c2) Schneiden entlang einer ebenen Schneidkontur zum Formen von Seitenrändern des Elektrodensegments.

Vorzugsweise umfasst Schritt c) den Schritt:
c3) Schneiden mittels eines gelenkten Laserstrahls.

Vorzugsweise umfasst Schritt c) den Schritt:
c4) Ausschneiden von Ableiterfahnen an wenigstens einem Seitenrand des Elektrodensegments.

Vorzugsweise umfasst Schritt c) den Schritt:
c5) Durchführen eines zweidimensionalen Laserschnitts innerhalb der Schneidebene.

Vorzugsweise umfasst Schritt c) den Schritt:
c6) Reinigen des Elektrodensegments nach dem Schneiden.

Vorzugsweise umfasst Schritt d) den Schritt:
d1) Anpassen des Abstands mittels einer Steuerungssoftware.

Vorzugsweise umfasst Schritt d) den Schritt:
d2) Wegbewegen einer Transporteinheit, die ein soeben abgeschnittenes Elektrodensegment trägt, von einer Schneid- oder Vereinzelungsstelle.

Vorzugsweise umfasst Schritt d) den Schritt:
d3) Weitertransportieren des abgeschnittenen Elektrodensegments zu einer Einrichtung zum Durchführen von Schritt f).

Vorzugsweise umfasst Schritt d) den Schritt:
d4) Auslassen eines Elektrodensegments an einer ansonsten mit Elektrodensegment zu besetzenden Stelle auf dem Separator, um im Prozess der Herstellung von Monozellen die Herstellung einer Halbzelle, wie insbesondere ein SAS- oder SKS-Paket, zu ermöglichen.

Vorzugsweise umfasst Schritt d) den Schritt:
d5) Reinigen des abgeschnittenen Elektrodensegments und/oder der Transporteinheit.

Vorzugsweise umfasst Schritt f) den Schritt:
f1) Positionsgenaues Übergeben der vereinzelten Elektrodensegmente auf eine Transporteinrichtung mit Heizeinrichtung, insbesondere eine Vakuum-Heizwalze.

Vorzugsweise umfasst Schritt d) den Schritt:
f2) gezieltes Erwärmen des Elektrodensegments.

Vorzugsweise umfasst Schritt d) den Schritt:
f3) Anheben der Elektrodensegmente auf eine sich oberhalb der Schneidebene befindliche Fixierstelle.

Vorzugsweise umfasst Schritt d) den Schritt:
f4) Laminieren von Separatorbahn und Elektrodensegment zwischen zwei Walzen.

Vorzugsweise umfasst Schritt d) den Schritt:
f5) Laminieren von Separatorbahn und Elektrodensegment zwischen unbeschichteten Hartmetallflächen und/oder zwischen zwei harten Oberflächen.

Vorzugsweise umfasst Schritt d) den Schritt:
f6) Reinigen einer von der Transporteinheit abgehobenen Seite des Elektrodensegments.

Vorzugsweise umfasst Schritt d) den Schritt:
f7) Aufpressen der Separatorbahn mittels einer Laminationswalze auf eine Vakuum-Heizwalze oder temperierte Walze oder extern temperierte Vakuumwalze, die die Elektrodensegmente transportiert.

Gemäß einem weiteren Aspekt schafft die Erfindung ein Monozell-Herstellverfahren zum Herstellen von Monozellen für eine Batterie, wobei die Monozelle jeweils ein Anodensegment, ein Kathodensegment und eine Separatorschicht zwischen dem Anodensegment und dem Kathodensegment sowie wenigstens eine Separatorschicht an einer abgewandten Oberfläche des Anodensegments und/oder des Kathodensegments aufweist, wobei das Monozell-Herstellverfahren die Schritte umfasst:
A) Bereitstellen eines Anodenstrangs mit einer ersten Separatorbahn und daran fixierten Anodensegmenten mittels eines Elektrodenstrangbereitstellverfahrens nach einer der voranstehenden Ausgestaltungen, wobei in Schritt a) ein bahnförmiges Anodensubstrat bereitgestellt wird,
B) Bereitstellen eines Kathodenstrangs mit einer zweiten Separatorbahn und daran fixierten Kathodensegmenten mittels des Elektrodenstrangbereitstellverfahrens nach einer der voranstehenden Ausgestaltungen, wobei in Schritt a) ein bahnförmiges Kathodensubstrat bereitgestellt wird,
C) Bereitstellen eines Verbundstrangs durch relatives Positionieren und Zusammenfügen des Anodenstrangs und des Kathodenstrangs, so dass die Anodensegmente und Kathodensegmente zueinander ausgerichtet übereinander liegen, und
D) Abschneiden der Monozellen von dem in Schritt C) erhaltenen Verbundstrang.

Gemäß einem weiteren Aspekt schafft die Erfindung ein Batteriezellstapelherstellverfahren zum Herstellen eines Zellstapels für eine Batterie, umfassend Durchführen des Monozell-Herstellverfahrens gemäß der voranstehenden Ausgestaltung und Aufstapeln der dadurch hergestellten Monozellen zu einem Zellstapel.

Gemäß einem weiteren Aspekt schafft die Erfindung eine Elektrodenstrangbereitstellvorrichtung zum Bereitstellen eines Elektrodenstrangs, der eine Separatorbahn und daran mit Abstand zueinander angebrachte Elektrodensegmente aufweist, umfassend:
eine Elektrodensubstratbereitstelleinrichtung zum Bereitstellen eines bahnförmigen Elektrodensubstrats;
ein Transportsystem, das entlang einer Führungsbahn einzeln, unabhängig voneinander bewegbare Transporteinheiten aufweist, wobei das Transportsystem dazu eingerichtet ist, das von der Elektrodensubstratbereitstelleinrichtung bereitgestellte bahnförmige Elektrodensubstrat aufzunehmen und eben entlang einer Schneidebene zu bewegen;
eine Schneideinrichtung zum Schneiden des Elektrodensubstrats entlang einer ein- oder zweidimensional in der Schneidebene verlaufenden Schneidkontur, um Elektrodensegmente von dem Elektrodensubstrat abzuschneiden;
eine Separatorbahnbereitstelleinrichtung zum Bereitstellen einer Separatorbahn;
eine Aufbring- und Fixiereinrichtung zum Aufbringen und Fixieren von mittels des Transportsystems relativ zueinander positioniert angelieferten Elektrodensegmente auf der Separatorbahn; und eine Steuerung, die dazu eingerichtet ist, die Elektrodenstrangbereitstellvorrichtung zum Durchführen des Elektrodenstrangbereitstellverfahrens nach einer der voranstehenden Ausgestaltungen anzusteuern.

Es ist bevorzugt, dass das Transportsystem Transporteinheiten mit austauschbaren Warenträgern aufweist, um durch Austausch von Warenträgern das Transportsystem an unterschiedliche Elektrodensegmentformate anzupassen.

Es ist bevorzugt, dass das Transportsystem dazu eingerichtet ist, das Elektrodensubstrat in der bahnförmigen und/oder der vereinzelten Form gezielt mittels Vakuums an den einzelnen Transporteinheiten zum Transportieren und Schneiden festzuhalten. Anstelle eines Festhaltens mittels Vakuums ist bei anderen Ausgestaltungen alternativ oder zusätzlich ein mechanisches Festhalten des bahnförmigen oder vereinzelten Elektrodensubstrats, insbesondere mittels Greifer, an den Transporteinheiten vorgesehen.

Es ist bevorzugt, dass das Transportsystem als Software ausgebildete Mittel zum Einstellen eines Abstands zwischen abgeschnittenen Elektrodensegmenten mittels Relativbewegung der Transporteinheiten, um die Elektrodensegmente relativ zueinander zu positionieren, aufweist. Bei anderen Ausgestaltungen weisen die Mittel zum Einstellen des Abstands zwischen abgeschnittenen Elektrodensegmenten mechanische Abstandshalter zwischen den Transporteinheiten auf.

Vorzugsweise ist die Schneideinrichtung eingerichtet zum Schneiden auf einer ebenen Oberfläche.

Vorzugsweise ist die Schneideinrichtung eingerichtet zum Schneiden entlang einer ebenen Schneidkontur zum Formen von Seitenrändern des Elektrodensegments.

Vorzugsweise ist die Schneideinrichtung eingerichtet zum Schneiden mittels eines gelenkten Laserstrahls.

Vorzugsweise ist die Schneideinrichtung eingerichtet zum Ausschneiden von Ableiterfahnen an wenigstens einem Seitenrand des Elektrodensegments.

Vorzugsweise ist die Schneideinrichtung eingerichtet zum Durchführen eines zweidimensionalen Laserschnitts innerhalb der Schneidebene.

Vorzugsweise umfasst die Aufbring- und Fixiereinrichtung eine Heizeinrichtung zum gezielten Erwärmen der Elektrodensegmente.

Vorzugsweise umfasst die Aufbring- und Fixiereinrichtung eine Transporteinrichtung zum Transportieren und Abheben der relativ zueinander positionierten Elektrodensegmente von den Transporteinheiten zu einer Laminierstelle.

Vorzugsweise umfasst die Aufbring- und Fixiereinrichtung eine Vakuum-Heizwalze oder temperierte Walze oder extern temperierte Vakuum-Walze.

Vorzugsweise umfasst die Aufbring- und Fixiereinrichtung eine vorzugsweise unbeschichtete Laminierwalze.

Vorzugsweise umfasst die Aufbring- und Fixiereinrichtung eine Presseinrichtung.

Gemäß einem weiteren Aspekt schafft die Erfindung eine Monozell-Herstellvorrichtung, umfassend eine erste Elektrodenstrangbereitstelleinrichtung nach einer der voranstehenden Ausgestaltungen zum Bereitstellen eines mit Anodensegmenten als Elektrodensegmente versehenen Anodenstrangs, eine zweite Elektrodenstrangbereitstelleinrichtung nach einer der voranstehenden Ausgestaltungen zum Bereitstellen eines mit Kathodensegmenten als Elektrodensegment versehenen Anodenstrangs, eine Verbundstrangbereitstelleinrichtung, die dazu eingerichtet ist, den Anodenstrang und den Kathodenstrang zu einem Verbundstrang mit zueinander ausgerichtet übereinander liegenden Anoden- und Kathodensegmenten zu verbinden, und eine Vereinzelungseinrichtung zum Vereinzeln von Monozellen durch Abschneiden von dem Verbundstrang.

Gemäß einem weiteren Aspekt schafft die Erfindung eine Zellstapelherstellvorrichtung, umfassend eine Monozell-Herstellvorrichtung gemäß der voranstehenden Ausgestaltung und eine Stapeleinrichtung zum Stapeln mehrerer durch die Monozell-Herstellvorrichtung hergestellter Monozellen zu einem Zellstapel.

Gemäß einem weiteren Aspekt schafft die Erfindung eine Steuerung für eine Vorrichtung nach einer der voranstehenden Ausgestaltungen, dazu eingerichtet, die Vorrichtung zum Durchführen des Verfahrens nach einer der voranstehenden Ausgestaltungen anzusteuern.

Die Steuerung weist insbesondere einen Prozessor und einen Speicher mit einem darin geladenen Computerprogramm auf.

Gemäß einem weiteren Aspekt schafft die Erfindung auch ein Computerprogramm, umfassend Anweisungen, die eine Vorrichtung nach einer der voranstehenden Ausgestaltungen dazu veranlassen, das Verfahren nach einer der voranstehenden Ausgestaltungen durchzuführen.

Bevorzugte Ausgestaltungen der Erfindung betreffen ein Verfahren zur Herstellung von Monozellen. Die Erfindung ist insbesondere anwendbar auf dem Gebiet der Elektromobilität zur Herstellung von wiederaufladbaren Batterien für elektrisch angetrieben Fahrzeuge. Zur wirtschaftlichen Herstellung sollen Monozellen für derartige Batterien in Großserientechnik mit sehr geringen Taktzeiten prozesssicher hergestellt werden.

Bevorzugte Ausgestaltungen der Erfindung bieten insbesondere einen oder mehrere der folgenden Vorteile oder Vorzüge:
- Eine Herstell-Anlage zum Herstellen von Monozellen mit den Verfahren und Vorrichtungen gemäß vorteilhaften Ausgestaltungen der Erfindung kann linienförmig ausgebildet sein, was einen günstigen Materialflusses ermöglicht.
- Die Taktzeiten können im Bereich von 0,1s pro Monozelle oder auch darunter liegen.
- Übergaben von Elektroden auf Basis von Vermessungen oder bildbasierten Verfahren sind entbehrlich, was geringere Anforderungen an Rechenleistungen und Prozesszeiten bedingt.
- Eine Laminierung findet nicht unterhalb der Vereinzelung der Elektrodenbahnen statt, so dass Verunreinigungen vermieden werden können.

Bei bisherigen Produktionsanlagen können folgende Problemstellungen auftreten, von denen eines oder mehrere durch vorteilhafte Ausgestaltungen der Erfindung verbessert werden:
- Ein Laserschnitt auf einer dreidimensionalen Oberfläche, die sich zudem bewegt, ist kompliziert einzurichten. Zudem entsteht hierbei aufgrund der Eigenschaften des Lasers eine größere Wärmeeinflusszone in dem zu trennenden Material. Bei bevorzugten Ausgestaltungen der Erfindung findet der Schnitt daher auf einer geraden Oberfläche statt.
- Die Lamination und der Schnitt der Elektroden erfolgen bei bevorzugten Ausgestaltungen voneinander unabhängig, da die Wärmeeintragung beim Schnitt zu Toleranzproblemen führen kann.
- Die Lamination erfolgt bei bisherigen Produktionsanlagen durch eine Walze mit einer elastischen Beschichtung und wird bei bevorzugten Ausgestaltungen der Erfindung auf "hart-hart" geändert. Durch den effektiveren Druckeintrag lässt sich die Laminationstemperatur reduzieren. Durch die Verwendung einer unbeschichteten Walze lassen sich zudem die mechanisch wirkenden Kräfte bei der Lamination verringern.

- Bei einer Veränderung des herzustellenden Batterieformats soll die Anlage ohne großen Aufwand umrüstbar sein.
- Die Materialzufuhr erfolgt günstigerweise von einer zentralen Stelle aus, kann jedoch auch zur Mitte hin verschoben werden. Ein zentrales Materiallager soll die Zuführung der Coils und Separatorrollen in den Trocken- Reinraum erleichtern und weitestgehend automatisieren.
- Der Separator besitzt meist einen gewissen Überstand über die Elektroden hinaus. Der Überstand, der durch einen sogenannten Gap zwischen den einzelnen Elektroden auf der Separatorbahn erzeugt wird, wird anstelle der üblichen, mechanischen Erstellung mit Hilfe einer Kulissenführung bei bevorzugten Ausgestaltungen durch eine einfachere und formatflexiblere Lösung ersetzt.
- Der Laserschnitt soll idealerweise auf "12 Uhr" erfolgen um eine Verschmutzung der Laser zu vermeiden. Ein Bereich zwischen "9:00 und 15:00 Uhr" ist angestrebt.

Bei bevorzugten Ausgestaltungen der Erfindung wird ein Transportsystem mit unabhängig voneinander bewegbaren Transporteinheiten (wie z.B. ein Moversystem mit frei verfahrbaren Movern, wie es durch Beckhoff XTS, auf dem Markt erhältlich ist, oder ein Transportsystem von B&R Supertrack) genutzt, um eine Elektrodenbahn (nahezu endlos) per Vakuum aufzunehmen und zur Vereinzelungsstelle zu transportieren. Nach der Vereinzelung der Elektrodenbahn in Teilstücke, wird durch die flexiblen Transporteinheiten der frei einstellbare Spalt (Gap) zwischen den einzelnen Elektrodenstücken erstellt. Die Vereinzelung findet hier auf einer ebenen Oberfläche statt. Für geänderte Produktgrößen werden bei bevorzugten Ausgestaltungen auf den Transporteinheiten andere Warenträger montiert, der Abstand kann z.B. über die Software oder mechanisch entsprechend angepasst werden.

Nach dem Laserschnitt folgt vorzugsweise eine positionsgenaue Übergabe der vereinzelten Elektroden auf eine Vakuum-Heizwalze; auch andere Walzen, wie z.B. temperiert oder fremdtemperiert, sind möglich.

Bei bevorzugten Ausführungsformen werden Stellen, an denen die Elektrodenbahnen zusammengefügt wurden, nicht übergeben, sondern können optional separat ausgeschleust werden. Die Elektroden werden für die Halbzellenlamination auf dieser Walze erwärmt. D. h. die Elektroden werden nicht mehr während des Laserschnittes erwärmt, was zur Folge hat, das temperaturbedingte Längenausdehnungen keinen negativen Effekt mehr auf die Genauigkeit des Laserschnittes haben.

Die Lamination der Halbzelle erfolgt gemäß bevorzugten Ausgestaltungen der Erfindung getrennt vom Laserschnitt nach dieser Übergabe in einem separaten Bereich zwischen der Transport-Walze, wie z.B. Vakuum- Heizwalze, und einer Laminationswalze. Die Lamination kann hier zwischen zwei harten Oberflächen erfolgen.

Nach der erfolgten Lamination der sogenannten Halbzellen werden bei bevorzugten Ausgestaltungen der Erfindung die beiden Halbzellenstränge zu einer Monozelle kombiniert und ebenfalls zusammen laminiert.

Bevorzugte Ausführungsformen der Erfindung bieten einen, mehrere oder alle der folgenden Vorteile:
- hohe Formatflexibilität
- "Hart-Hart"-Lamination bei der Halbzellenherstellung
- einfachere Gap-Steuerung zwischen den Elektroden
- Kein Wärmeeinfluss auf den Laserschnitt
- 2D-Laserschnitt mit einfacherer Kalibrierung bei der Inbetriebnahme oder Formatwechsel
- Einschleusung einer Halbzelle in den späteren Stapelprozess durch das Weglassen einer Elektrode nach dem Vereinzeln mittels des flexiblen Transportsystems beispielsweise ein SAS-Paket.

Ein Ausführungsbeispiel wird im Folgenden anhand der beigefügten Zeichnungen näher erläutert. Darin zeigt:
- Fig. 1: eine schematische Übersichtsdarstellung einer ersten Ausführungsform einer Zellstapelherstellvorrichtung zum Herstellen eines Batteriezellstapels aus einem ersten Elektrodenstrang und einem zweiten Elektrodenstrang;
- Fig. 2: eine schematische Übersichtsdarstellung einer zweiten Ausführungsform der Zellstapelherstellvorrichtung zum Herstellen eines Batteriezellstapels aus dem ersten Elektrodenstrang und dem zweiten Elektrodenstrang

Im Folgenden werden unter Bezug auf die beigefügten Zeichnungen Verfahren und Vorrichtungen zum Bereitstellen eines Elektrodenstrangs, zum Herstellen von Monozellen aus einem ersten und zweiten derart bereitgestellten Elektrodenstrang und zum Herstellen eines Batteriezellstapels aus derartigen Monozellen beschrieben.

In den Figuren sind unterschiedliche Ausführungsbeispiele für eine Zellstapelherstellvorrichtung 20 zum Herstellen eines Batteriezellstapels 22 dargestellt. Die Zellstapelherstellvorrichtung 20 weist eine Monozell-Herstellvorrichtung 24 und eine Stapeleinrichtung 26 auf.

Die Monozell-Herstellvorrichtung 24 weist eine erste Elektrodenstrangbereitstelleinrichtung 28.1, eine zweite Elektrodenstrangbereitstelleinrichtung 28.2 und eine Verbundstrangbereitstelleinrichtung 30 auf.

Die jeweilige Elektrodenstrangbereitstellvorrichtung 28.1, 28.2 dient jeweils zum Bereitstellen eines Elektrodenstrangs 32.1, 32.2, der eine Separatorbahn 34.1, 34.2 und daran mit Abstand zueinander angebrachte Elektrodensegmente 36.1, 36.2 aufweist. Der Aufbau der ersten und zweiten Elektrodenstrangbereitstellvorrichtung 28.1, 28.2 ist im Wesentlichen gleich und wird im Folgenden nur einmal am Beispiel einer der ersten und zweiten Elektrodenstrangbereitstellvorrichtung 28.1, 28.2 beschrieben.

Die Elektrodenstrangbereitstellvorrichtung 28.1, 28.2 weist eine Elektrodensubstratbereitstelleinrichtung 38.1, 38.2, ein Transportsystem 40.1, 40.2, eine Schneideinrichtung 42.1, 42.2, eine Separatorbahnbereitstelleinrichtung 44.1, 44.2, eine Aufbring- und Fixiereinrichtung 46.1, 46.2 und eine Steuerung 48.1, 48.2 auf.

Die Elektrodensubstratbereitstelleinrichtung 38.1, 38.2 ist zum Bereitstellen eines bahnförmigen Elektrodensubstrats 50.1, 50.2 ausgebildet. Beispielsweise weist die Elektrodensubstratbereitstelleinrichtung 38.1, 38.2 einen Rollenhalter für eine Vorratsrolle 52 mit dem jeweiligen bahnförmigen Elektrodensubstrat 50.1, 50.2 sowie wenigstens einen Antriebsmotor 58, M auf, der zur Regelung der Bahnspannung eingerichtet ist. Weiter ist optional eine Messwalze (nicht dargestellt) vorgesehen, über die das bahnförmige Elektrodensubstrat 50.1, 50.2 geleitet wird und die die Abrolllänge und/oder die Abrollgeschwindigkeit, mit der das bahnförmige Elektrodensubstrat 50.1, 50.2 abgerollt und bereitgestellt wird, erfasst und eine entsprechende Information der Steuerung 48.1, 48.2 zuleitet. Daten über die Lieferung des bahnförmigen Elektrodensubstrats 50.1, 50.2 können zusätzlich oder alternativ auch über die Stellung eines Tänzers (nicht dargestellt) ermittelt werden.

Außerdem weist die Elektrodensubstratbereitstelleinrichtung 38.1, 38.2 bei den dargestellten Ausführungsformen Ausrichtelemente 56, wie z.B. Rollen, und eventuell auch weitere Antriebe 58 zum Antreiben der Bewegung des bahnförmigen Elektrodensubstrats 50.1, 50.2 auf.

Das Transportsystem 40.1, 40.2 weist entlang einer umlaufenden Führungsbahn 60 einzeln bewegbare Transporteinheiten 62 auf. Die Bewegung der einzelnen Transporteinheiten 62 lässt sich einzeln durch die Steuerung 48.1, 48.2 steuern. Das Transportsystem 40.1, 40.2 ist dazu eingerichtet, das von der Elektrodensubstratbereitstelleinrichtung 38.1, 38.2 bereitgestellte bahnförmige Elektrodensubstrat 50.1, 50.2 aufzunehmen und eben entlang einer Schneidebene 64 zu bewegen.

Beispielsweise weist die Führungsbahn 60 anschließend an eine Aufnahmestelle 66 einen geradlinigen Bereich auf, so dass sich die Oberflächen von Werkstückträgern der Transporteinheiten 62, auf denen das Elektrodensubstrat 50.1, 50.2 aufliegt und beispielsweise mittels Vakuums oder Greifern (nicht dargestellt) daran fixiert wird, entlang der Schneidebene 64 bewegen. Mit 65 ist hierbei der Bereich der Elektrodenfixierung bezeichnet, wo das Elektrodensubstrat 50.1, 50.2 und die daraus vereinzelten Elektrodensegmente an den Transporteinheiten 62 fixiert sind.

Bei einigen Ausführungsformen laufen die auf den Transporteinheiten 62 angebrachten Werkstückträger in dem Bereich der Elektrodenfixierung 65 an eine Vakuumquelle (nicht dargestellt) angeschlossen, um die Elektrodensegmente 36.1, 36.2 in diesem Bereich an den Transporteinheiten 62 zu fixieren. Bei bevorzugten Ausführungsformen wird auf der jeweiligen Transporteinheit 62 eine Vakuumpumpe zur Vakuumerzeugung (nicht dargestellt) mitgeführt, die z.B. über die Steuerung 48.1, 48.2 individuell ansteuerbar ist. Bei weiteren Ausführungsformen (nicht dargestellt) sind an den Transporteinheiten 62 einzeln ansteuerbare Greifer vorgesehen.

Demnach ist das Transportsystem 40.1, 40.2 bei den gezeigten Ausführungsformen dazu eingerichtet, das Elektrodensubstrat 50.1, 50.2 in der bahnförmigen und/oder der vereinzelten Form gezielt mittels Vakuums (oder auch alternativ mit anderen Mitteln, wie z.B. Greifern) an den einzelnen Transporteinheiten 62 zum Transportieren und Schneiden festzuhalten.

Bei einigen Ausführungsformen weist das Transportsystem 40.1, 40.2 Transporteinheiten 62 mit austauschbaren Warenträgern auf, um das Transportsystem 40.1, 40.2 durch Austausch von Warenträgern an unterschiedliche Elektrodensegmentformate anzupassen.

Wie oben erwähnt, ist die Bewegung der Transporteinheiten 62 einzeln steuerbar. Bei einigen Ausführungsformen weist das Transportsystem 40.1, 40.2 hierzu insbesondere in der Steuerung 48.1, 48.2 als Software implementierte Mittel zum Einstellen eines Abstands zwischen abgeschnittenen Elektrodensegmenten 36.1, 36.2 durch Relativbewegung der Transporteinheiten 62 auf, um die Elektrodensegmente 36.1, 36.2 relativ zueinander zu positionieren.

Die Schneideinrichtung 42.1, 42.2 ist zum Schneiden des Elektrodensubstrats 50.1, 50.2 entlang einer ein- oder zweidimensional in der Schneidebene 64 verlaufenden Schneidkontur ausgebildet, um die Elektrodensegmente 36.1, 36.2 von dem Elektrodensubstrat 50.1, 50.2 abzuschneiden. Beispielsweise weist die Schneideinrichtung 42.1, 42.2, wie dies grundsätzlich aus [1] bekannt ist, einen Schneidlaser mit entsprechenden Ablenkeinheiten auf, die durch die Steuerung 48.1, 48.2 angesteuert werden, um den Laserstrahl entlang der Schneidkontur zu lenken.

Die Schneideinrichtung 42.1, 42.2 ist zum Schneiden auf der ebenen Oberfläche eingerichtet. Die Schneidkontur der Schneideinrichtung 42.1, 42.2 ist zum Formen der Seitenränder des jeweiligen Elektrodensegments 36.1, 36.2 ausgebildet. Insbesondere können dabei auch Ableiterfahnen an wenigstens einem Seitenrand des Elektrodensegments 36.1, 36.2 beim Schneiden ausgebildet werden. Dies kann mittels Durchführens eines zweidimensionalen Laserschnitts innerhalb der Schneidebene 64 erfolgen.

Da die Schneidkontur in einer Ebene liegt, ist das Steuern des Schneidstrahls einschließlich Fokussierung wesentlich einfacher als bei einem Schneiden auf einer gekrümmten Schneidfläche. Alternativ können auch andere Schneidtechniken als Laser aufgrund des ebenen Verlaufs der Schneidkurve einfacher eingesetzt werden.

Die Separatorbahnbereitstelleinrichtung 44.1, 44.2 ist zum Bereitstellen der Separatorbahn 34.1, 34.2 eingerichtet. Analog zu der Elektrodensubstratbereitstelleinrichtung 38.1, 38.2 kann sie beispielsweise eine Vorratsrolle 52 mit der Separatorbahn 34.1, 34.2 und wenigstens einen Antrieb 58, der insbesondere zur Regelung der Bahnspannung eingerichtet ist und optional auch eine oder mehrere Messwalzen (nicht dargestellt) oder sonstige Messaufnehmer, beispielsweise zur Erfassung der Position eines Tänzers, deren Signale ebenfalls an die Steuerung 48.1, 48.2 geleitet werden, aufweisen.

Die Aufbring- und Fixiereinrichtung 46.1, 46.2 ist zum Aufbringen und Fixieren von mittels des Transportsystems 40.1, 40.2 relativ zueinander positioniert angelieferten Elektrodensegmente 36.1, 36.2 auf der Separatorbahn 34.1, 34.2 ausgebildet.

Bei einigen Ausführungsformen weist die Aufbring- und Fixiereinrichtung 46.1, 46.2 eine Heizeinrichtung 68 zum gezielten Erwärmen der Elektrodensegmente 36.1, 36.2 auf. Bei einigen Ausführungsformen weist die Aufbring- und Fixiereinrichtung 46.1, 46.2 eine Transporteinrichtung 70 zum Transportieren und Abheben der relativ zueinander positionierten Elektrodensegmente 36.1, 36.2 von den Transporteinheiten 62 zu einer Laminierstelle 72 auf.

Bei den dargestellten Ausführungsformen ist als Transporteinrichtung 70 mit Heizeinrichtung 68 eine Vakuum-Heizwalze 74 vorgesehen, deren Oberfläche durch eine integrierte Heizung gezielt beheizbar ist und mit Ansaugöffnungen versehen ist, um die Elektrodensegmente 36.1, 36.2 anzusaugen. Alternativ kann auch eine temperierte Walze oder eine extern temperierte Vakuum-Walze vorgesehen sein.

Bei einigen Ausführungsformen weist die Aufbring- und Fixiereinrichtung 46.1, 46.2 weiter eine vorzugsweise unbeschichtete Laminierwalze 76 auf, die mit der Presskraft einer Presseinrichtung 78 auf die Transporteinrichtung 70 auf die Transporteinrichtung 70, insbesondere die Vakuum-Heizwalze 74, gepresst wird, um die Elektrodensegmente 36.1, 36.2 auf die durch die Separatorbahnbereitstelleinrichtung 44.1, 44.2 bereitgestellte Separatorbahn 34.1, 34.2 zu laminieren.

Bei den dargestellten Ausführungsbeispiel ist die Laminierwalze 76 durch die Steuerung 48.1, 48.2 gesteuert angetrieben. Bei einigen Ausführungsformen werden dadurch auch die Bewegungen der Vakuum-Heizwalze 74 und der Separatorbahn 34.1, 34.2 angetrieben. Bei anderen Ausführungsformen ist die Vakuum-Heizwalze 74 durch die Steuerung 48.1, 48.2 gesteuert angetrieben. Es ist auch eine Laminierwalze 76 ohne eigenen Antrieb denkbar. Bei einigen Ausführungsformen ist vor der Laminierwalze 76 eine Zugeinheit mit Antrieb zur Erzeugung der Bahnspannung der Separatorbahn 34.1, 34.2 vorgesehen.

Die Steuerung 48.1, 48.2 ist dazu eingerichtet, die Elektrodenstrangbereitstellvorrichtung 28.1, 28,2 zum Durchführen des im Folgenden erläuterten Elektrodenstrangbereitstellverfahrens anzusteuern.

Die Steuerung 48.1, 48.2 weist einen Prozessor 79 und einen Speicher 81 mit einem darin gespeicherten Computerprogramm auf, das die entsprechenden Anweisungen enthält, welche die Einheiten der Elektrodenstrangbereitstellvorrichtung 28.1, 28.2 veranlassen, dieses Elektrodenstrangbereitstellverfahren durchzuführen. Die jeweilige Steuerung 48.1, 48.2 der ersten und zweiten Elektrodenstrangbereitstellvorrichtung 28.1, 28.2 können als Teil einer Gesamtsteuerung 80 der Zellstapelherstellvorrichtung 20 vorgesehen sein.

Das Elektrodenstrangbereitstellverfahren zum Bereitstellen des jeweiligen Elektrodenstrangs - erster oder zweiter Elektrodenstrangs 32.1, 32.2 - weist folgende Schritte auf:
a) Bereitstellen des bahnförmigen Elektrodensubstrats 50.1, 50.2;
b) Aufnehmen des bahnförmigen Elektrodensubstrats 50.1, 50.2 mittels des Transportsystems 40.1, 40.2, das die entlang der Führungsbahn 60 einzeln bewegbaren Transporteinheiten 62 aufweist, und ebenes Bewegen des Elektrodensubstrats 50.1, 50.2 entlang der Schneidebene 64;
c) Schneiden des bahnförmigen Elektrodensubstrats 50.1, 50.2 in der Schneidebene, um Elektrodensegmente 36.1, 36.2 abzuschneiden, die jeweils einzeln auf einer der Transporteinheiten 62 angeordnet sind;
d) Einstellen eines Abstands zwischen abgeschnittenen Elektrodensegmenten 36.1, 36.2 mittels Relativbewegung der Transporteinheiten 62, um die Elektrodensegmente 36.1, 36.2 relativ zueinander zu positionieren;
e) Bereitstellen der Separatorbahn 34.1, 34.2; und
f) Aufbringen und Fixieren der relativ zueinander positionierten Elektrodensegmente 36.1, 36.2 auf der Separatorbahn 34.1, 34.2.

Bei den gezeigten Ausführungsbeispielen wird Schritt b) derart durchgeführt, dass das bahnförmige Elektrodensubstrat 50.1, 50.2 an der Aufnahmestelle 66 auf den jeweils daran vorbeifahrenden Transporteinheiten 62 angesaugt wird und dann mittels der Transporteinheiten 62 zu einer Vereinzelungsstelle - bei Bezugszeichen 3 - transportiert wird, wo durch die ebene Bewegung der Transporteinheiten 62 auf den Transporteinheiten 62 eine ebene Oberfläche zum Schneiden als Schneidebene 64 bereitgestellt wird.

Wie oben bereits erwähnt werden die Transporteinheiten 62 mit austauschbaren Warenträgern bereitgestellt. Zum Einrichten der Zellstapelherstellvorrichtung 20 für ein bestimmtes Format der Elektroden - Anoden und/oder Kathoden - werden die Warenträger entsprechend des herzustellenden Elektrodenformats aus einem Sortiment unterschiedlicher Warenträger ausgewählt.

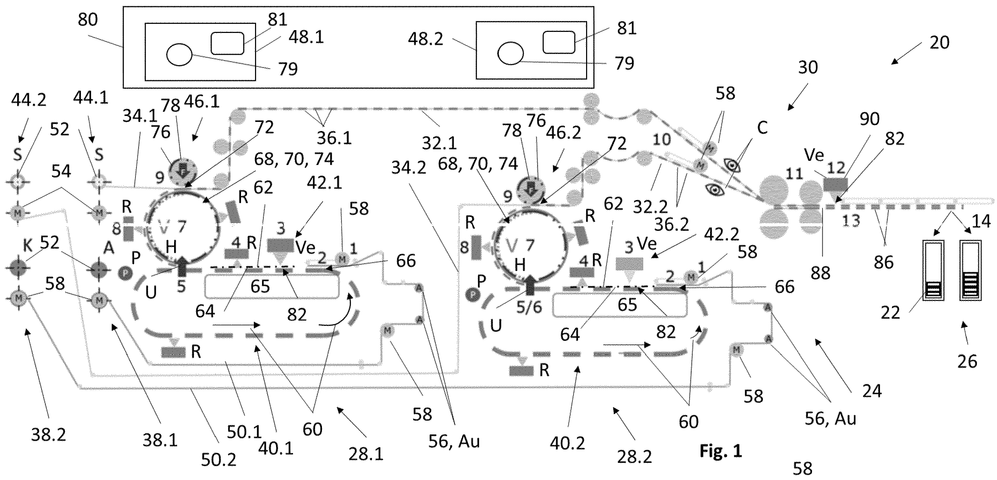

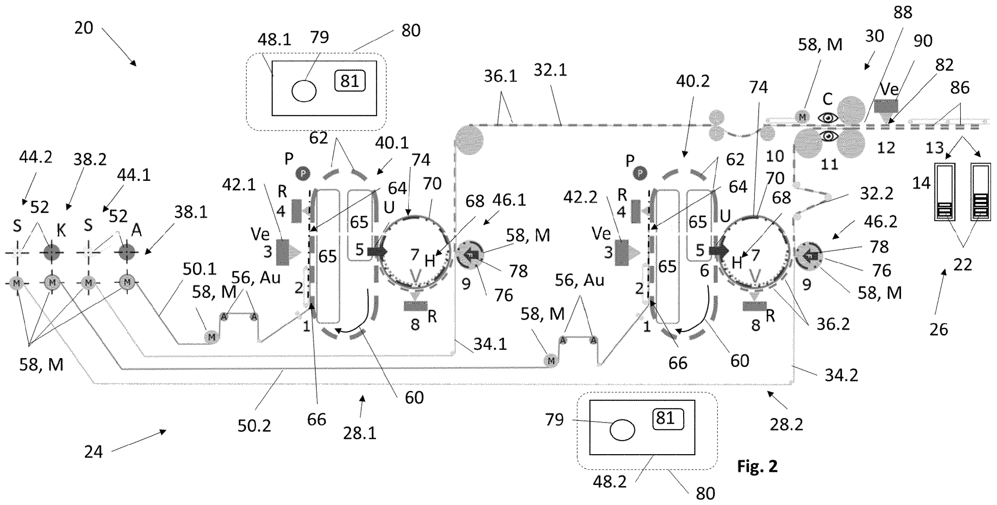

Bei der in Fig. 1 dargestellten Ausführungsform wird jeweils eine horizontale Schneidebene bereitgestellt; und das Elektrodensubstrat 50.1, 50.2 wird horizontal entlang der Schneidebene bewegt. Bei der in Fig. 2 dargestellten Ausführungsform wird eine im Wesentlichen vertikale Schneidebene bereitgestellt, und das Elektrodensubstrat 50.1, 50.2 wird entlang dieser vertikalen Schneidebene vertikal bewegt. Selbstverständlich sind auch Mischformen - eines der Transportsysteme 40.1, 40.2 transportiert das Elektrodensubstrat horizontal, das andere vertikal - oder auch schräge Schneidebenen möglich.

Das Schneiden erfolgt bei den dargestellten Ausführungsformen auf einer ebenen Oberfläche auf den Warenträgern. Das Schneiden erfolgt entlang einer ebenen Schneidkontur, die zumindest zum Formen von Seitenrändern der Elektrodensegmente 36.1, 36.2 oder auch zum Formen von Ableiterfahnen oder dergleichen ausgebildet ist. Das Schneiden erfolgt insbesondere mittels wenigstens eines gelenkten Laserstrahls der entlang der Schneidkontur verfahren wird, wenngleich selbstverständlich auch andere Schneidtechniken (z.B. mit Messern, Stanzen) möglich sind. Somit wird vorzugsweise ein zweidimensionaler Laserschnitt in der Schneidebene 60 durchgeführt. Vorzugsweise wird das jeweilige Elektrodensegment 36.1, 36.2 nach dem Schneiden gereinigt.

Der Abstand zwischen den geschnittenen Elektrodensegmenten wird vorzugsweise der Abstand zwischen den Transporteinheiten 62 nach dem Schneiden mittels der Steuerungssoftware eingestellt. Hierzu wird insbesondere diejenige Transporteinheit 62, die ein soeben abgeschnittenes Elektrodensegment trägt, von der Vereinzelungsstelle 82 wegbewegt und mit passendem Abstand zu der Aufbring- und Fixiereinrichtung 46.1, 46.2 bewegt, wo der Schritt f) durchgeführt wird. Bei einigen Ausführungsformen kann - z.B. durch Zurückhalten der Transporteinheiten 62 - bei Bedarf ein Elektrodensegment 36.1, 36.2 an einer ansonsten mit Elektrodensegment zu besetzenden Stelle auf dem Separator ausgelassen werden, um im Prozess der Herstellung von Monozellen die Herstellung einer Halbzelle wie insbesondere ein SAS- oder SKS-Paket zu ermöglichen. Bei einigen Ausführungsformen erfolgt weiter ein Reinigen des abgeschnittenen Elektrodensegments und/oder der Transporteinheit.

Schritt f) wird bei einigen Ausführungsformen mit wenigstens einem oder mehreren der folgenden Unterschritte durchgeführt:
f1) Positionsgenaues Übergeben der vereinzelten Elektrodensegmente 36.1, 36.2 auf die Transporteinrichtung 70 mit Heizeinrichtung 68, insbesondere die Vakuum-Heizwalze 74;
f2) gezieltes Erwärmen des Elektrodensegments 36.1, 36.2 zum Laminieren;
f3) Anheben der Elektrodensegmente 36.1, 36.2 auf eine sich oberhalb der Schneidebene 64 befindliche Fixierstelle - Laminierstelle 72 - und somit außerhalb des Bereichs, der durch Schneidpartikel verschmutzt werden könnte;
f4) Laminieren von Separatorbahn 34.1, 34.2 und Elektrodensegment 36.1, 36.2 zwischen zwei Walzen 74, 76;
f5) Laminieren von Separatorbahn 34.1, 34.2 und Elektrodensegment 36.1, 36.2 zwischen unbeschichteten Hartmetallflächen und/oder zwischen zwei harten Oberflächen (z.B. an den Walzen 74, 76);
f6) Reinigen einer von der Transporteinheit 62 abgehobenen Seite des Elektrodensegments 36.1, 36.2;
f7) Aufpressen der Separatorbahn mittels der Laminationswalze 76 auf die Vakuum-Heizwalze 74 oder temperierte Walze oder extern temperierte Vakuumwalze, die die Elektrodensegmente 36.1, 36.2 transportiert.

Das Elektrodenstrangbereitstellverfahren wird insbesondere im Zuge der Herstellung von Monozellen 86 für eine Batterie durchgeführt, wobei die Monozelle 86 jeweils ein Anodensegment (Beispiel für ein erstes Elektrodensegment 36.1), ein Kathodensegment (Beispiel für ein zweites Elektrodensegment 36.2) und eine Separatorschicht zwischen dem Anodensegment und dem Kathodensegment sowie wenigstens eine Separatorschicht an einer abgewandten Oberfläche des Anodensegments und/oder des Kathodensegments aufweist (Schichtaufbau SASK oder SKSA). Das Monozell-Herstellverfahren umfasst insbesondere die Schritte:
A) Bereitstellen eines Anodenstrangs als erster Elektrodenstrang 32.1 (Halbzellenstrang) mit der ersten Separatorbahn S, 34.1 und daran fixierten ersten Elektrodensegmenten 36.1 in Form von Anodensegmenten mittels des Elektrodenstrangbereitstellverfahrens, wobei in Schritt a) ein bahnförmiges Anodensubstrat A bereitgestellt wird,
B) Bereitstellen eines Kathodenstrangs als zweiter Elektrodenstrang 32.2 (Halbzellenstrang) mit der zweiten Separatorbahn S, 34.2 und daran fixierten zweiten Elektrodensegmenten 36.2 in Form von Kathodensegmenten mittels des Elektrodenstrangbereitstellverfahrens, wobei in Schritt a) ein bahnförmiges Kathodensubstrat K bereitgestellt wird,
C) Bereitstellen eines Verbundstrangs 88 (Monozellenstrang) durch relatives Positionieren und Zusammenfügen des Anodenstrangs und des Kathodenstrangs, so dass die Anodensegmente und Kathodensegmente zueinander ausgerichtet übereinander liegen, und
D) Abschneiden der Monozellen 86 von dem in Schritt C) erhaltenen Verbundstrang 88.

Bei den dargestellten Ausgestaltungen der Verbundstrangbereitstelleinrichtung 30 dient die erste Elektrodenstrangbereitstellvorrichtung 28.1 demnach zum Bereitstellen eines mit Anodensegmenten als erste Elektrodensegmente 36.1 versehenen Anodenstrangs, und die zweite Elektrodenstrangbereitstelleinrichtung 28.2 dient zum Bereitstellen eines mit Kathodensegmenten als zweite Elektrodensegmente 36.2 versehenen Anodenstrangs. Die Verbundstrangbereitstelleinrichtung 30 ist dazu eingerichtet, den Anodenstrang und den Kathodenstrang zu dem Verbundstrang 88 mit zueinander ausgerichtet übereinander liegenden Anoden- und Kathodensegmenten zu verbinden, und eine Vereinzelungseinrichtung 90 ist zum Vereinzeln von Monozellen 86 durch Abschneiden von dem Verbundstrang 88 vorgesehen.

Bei der Zellstapelherstellvorrichtung ist zusätzlich zu dieser Monozell-Herstellvorrichtung 24 die Stapeleinrichtung 26 vorgesehen, die zum Stapeln mehrerer durch die Monozell-Herstellvorrichtung 24 hergestellter Monozellen zu einem Zellstapel ausgebildet ist.

Konkrete bevorzugte Ausgestaltungen des Zellstapelherstellverfahrens ergeben sich aus den Fig. 1 und 2. Folgende Prozessschritte sind gezeigt:
- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Optional kann bei Bedarf eine Elektrode ausgelassen werden für die Bereitstellung einer Halbzelle beispielsweise eines SAS-Paketes
- 7: Erwärmen der Elektroden
- 8: Optionale Reinigung der Elektroden
- 9: Laminierung der Halbzellen zu zwei Halbzellensträngen
- 10: Zusammenführung der Halbzellenstränge
- 11: Laminierung der beiden Halbzellenstränge zu einem Monozellenstrang
- 12: Vereinzeln der Monozellen
- 13: Übergabe der Monozellen an ein Transportband zur weiteren Verarbeitung
- 14: Stapeln der Monozellen zu einem Batteriezellstapel

Die in den Zeichnungen verwendeten Symbole bedeuten:
- U: Übergabe Lamination
- R: Reinigung
- Ve: Vereinzelung
- C: Kontrolle
- M: Antrieb
- Au: Ausrichten
- P: (Papierwickler/Mülleimer Autosplice)
- H: Heizung
- V: Vakuum
- S: Separator
- K: Kathode(nsubstrat)
- A: Anode(nsubstrat)

Bei der Ausführungsform von Fig. 2 sind im Unterschied zu der von Fig. 1 die Transportsysteme 40.1, 40.2 um 90° gedreht eingesetzt. Dies hat eine vereinfachte Bahnführung zur Folge, sowie eine Vereinfachung der Einstellung der Anpresskraft der Laminationswalze an der Laminierstelle 72. Nachteilig ist hierbei gegenüber der Variante aus Fig. 1 allerdings der weitere Transportweg der Elektrode über die Kurve an dem Transportsystem 40.1, 40.2 sowie ein mögliches Herabfallen eventuell anfallender Abfallprodukte bei der Trennung der einzelnen Elektroden.

### Bezugszeichenliste:

- 1: Zuführung von Elektroden und Separatoren als Bahnmaterial in den Schneide- und Laminierungsprozess
- 2: Aufziehen der Bahn auf ein Transportsystem mit flexibel beweglichen Trägern für die vereinzelten Elektroden
- 3: Vereinzeln der Elektrodenbahnen sowohl für die Anode als auch für die Kathode
- 4: Optionale Reinigung der Elektroden
- 5: Übergabe der Elektroden auf die Vakuumwalze
- 6: Optional kann bei Bedarf eine Elektrode ausgelassen werden für die Bereitstellung einer Halbzelle beispielsweiße eines SAS-Paketes
- 7: Erwärmen der Elektroden
- 8: Optionale Reinigung der Elektroden
- 9: Laminierung der Halbzellen zu zwei Halbzellensträngen
- 10: Zusammenführung der Halbzellenstränge
- 11: Laminierung der beiden Halbzellenstränge zu einem Monozellenstrang
- 12: Vereinzeln der Monozellen
- 13: Übergabe der Monozellen an ein Transportband zur weiteren Verarbeitung
- 14: Stapeln der Monozellen zu einem Batteriezellstapel
- 20: Zellstapelherstellvorrichtung
- 22: Batteriezellstapel
- 24: Monozell-Herstellvorrichtung
- 26: Stapeleinrichtung
- 28.1: erste Elektrodenstrangbereitstellvorrichtung
- 28.2: zweite Elektrodenstrangbereitstellvorrichtung
- 30: Verbundstrangbereitstelleinrichtung
- 32.1: erster Elektrodenstrang
- 32.2: zweiter Elektrodenstrang
- 34.1: erste Separatorbahn
- 34.2: zweite Separatorbahn
- 36.1: erstes Elektrodensegment
- 36.2: zweites Elektrodensegment
- 38.1: erste Elektrodensubstratbereitstelleinrichtung
- 38.2: zweite Elektrodensubstratbereitstelleinrichtung
- 40.1: erstes Transportsystem
- 40.2: zweites Transportsystem
- 42.1: erste Schneideinrichtung
- 42.2: zweite Schneideinrichtung
- 44.1: erste Separatorbahnbereitstelleinrichtung
- 44.2: zweite Separatorbahnbereitstelleinrichtung
- 46.1: erste Aufbring- und Fixiereinrichtung
- 46.2: zweite Aufbring- und Fixiereinrichtung
- 48.1: erste Steuerung
- 48.2: zweite Steuerung
- 50.1: erstes bahnförmiges Elektrodensubstrat
- 50.2: erstes bahnförmiges Elektrodensubstrat
- 52: Vorratsrolle
- 56: Ausrichtelement
- 58: Antrieb
- 60: Führungsbahn
- 62: Transporteinheit
- 64: Schneidebene
- 65: Elektrodenfixierung
- 66: Aufnahmestelle
- 68: Heizeinrichtung
- 70: Transporteinrichtung
- 72: Laminierstelle
- 74: Vakuum-Heizwalze
- 76: Laminierwalze
- 78: Presseinrichtung
- 79: Prozessor
- 80: Gesamtsteuerung
- 81: Speicher
- 82: Vereinzelungsstelle
- 86: Monozelle
- 88: Verbundstrang
- 90: Vereinzelungseinrichtung
- U: Übergabe Lamination
- R: Reinigung
- Ve: Vereinzelung
- C: Kontrolle
- M: Antrieb
- Au: Ausrichten
- P: (Papierwickler/Mülleimer Autosplice)
- H: Heizung
- V: Vakuum
- S: Separator
- K: Kathodensubstrat
- A: Anodensubstrat

## Patentansprüche

1. Elektrodenstrangbereitstellverfahren zum Bereitstellen eines Elektrodenstrangs (32.1, 32.2), der eine Separatorbahn (34.1, 34.2) und daran mit Abstand zueinander angebrachte Elektrodensegmente (36.1, 36.2) aufweist, wobei das Elektrodenstrangbereitstellverfahren umfasst:
a) Bereitstellen eines bahnförmigen Elektrodensubstrats (50,1. 50.2);
b) Aufnehmen des bahnförmigen Elektrodensubstrats (50.1, 50.2) mittels eines Transportsystems (40.1, 40.2), das entlang einer Führungsbahn (60) einzeln, unabhängig voneinander bewegbare Transporteinheiten (62) aufweist, und ebenes Bewegen des Elektrodensubstrats (50.1, 50.2) entlang einer Schneidebene (64);
c) Schneiden des bahnförmigen Elektrodensubstrats (50.1, 50.2) in der Schneidebene (64), um Elektrodensegmente (36.1, 36.2) abzuschneiden, die jeweils einzeln auf einer der Transporteinheiten (62) angeordnet sind;
d) Einstellen eines Abstands zwischen abgeschnittenen Elektrodensegmenten (36.1, 36.2) mittels einzeln gesteuerter Bewegung der Transporteinheiten (62), um die Elektrodensegmente (36.1, 36.2) relativ zueinander zu positionieren;
e) Bereitstellen einer Separatorbahn (34.1, 34.2);
f) Aufbringen und Fixieren der relativ zueinander positionierten Elektrodensegmente (36.1, 36.2) auf der Separatorbahn (34.1, 34.2).

2. Elektrodenstrangbereitstellverfahren nach Anspruch 1, **dadurch gekennzeichnet, dass** Schritt b) wenigstens einen oder mehrere der Schritte umfasst:
b1) Ansaugen des bahnförmigen Elektrodensubstrats (50.1, 50.2) an einer Aufnahmestelle (66) auf den Transporteinheiten (62);
b2) Transportieren des bahnförmigen Elektrodensubstrats (50.1, 50.2) mittels der Transporteinheiten (62) zu einer Vereinzelungsstelle (82), wo eine ebene Oberfläche zum Schneiden als Schneidebene (64) bereitgestellt wird;
b3) Bereitstellen von Transporteinheiten (62) mit austauschbaren Warenträgern, wobei die Warenträger entsprechend des herzustellenden Elektrodenformats aus einem Sortiment unterschiedlicher Warenträger ausgewählt werden;
b4) Bereitstellen einer horizontalen Schneidebene (64) und horizontales Bewegen entlang der Schneidebene (64);
b5) Bereitstellen einer im Wesentlichen vertikalen Schneidebene (64) und Bewegen entlang dieser Schneidebene (64).

3. Elektrodenstrangbereitstellverfahren nach einem der voranstehenden Ansprüche, **dadurch gekennzeichnet, dass** Schritt c) wenigstens einen oder mehrere der Schritte umfasst:
c1) Schneiden auf einer ebenen Oberfläche;
c2) Schneiden entlang einer ebenen Schneidkontur zum Formen von Seitenrändern des Elektrodensegments;
c3) Schneiden mittels eines gelenkten Laserstrahls;
c4) Ausschneiden von Ableiterfahnen an wenigstens einem Seitenrand des Elektrodensegments (36.1, 36.2);
c5) Durchführen eines zweidimensionalen Laserschnitts innerhalb der Schneidebene;
c6) Reinigen des Elektrodensegments (36.1, 36.2) nach dem Schneiden.

4. Elektrodenstrangbereitstellverfahren nach einem der voranstehenden Ansprüche, **dadurch gekennzeichnet, dass** Schritt d) wenigstens einen oder mehrere der Schritte umfasst:
d1) Anpassen des Abstands mittels einer Steuerungssoftware;
d2) Wegbewegen einer Transporteinheit (62), die ein soeben abgeschnittenes Elektrodensegment (36.1, 36.2) trägt, von einer Schneid- oder Vereinzelungsstelle (82);
d3) Weitertransportieren des abgeschnittenen Elektrodensegments (36.1, 36.2) zu einer Einrichtung zum Durchführen von Schritt f);
d4) Auslassen eines Elektrodensegments (36.1, 36.2) an einer ansonsten mit Elektrodensegment zu besetzenden Stelle auf dem Separator, um im Prozess der Herstellung von Monozellen die Herstellung einer Halbzelle wie insbesondere ein SAS- oder SKS-Paket zu ermöglichen;
d5) Reinigen des abgeschnittenen Elektrodensegments (36.1, 36.2) und/oder der Transporteinheit (62).

5. Elektrodenstrangbereitstellverfahren nach einem der voranstehenden Ansprüche, **dadurch gekennzeichnet, dass** Schritt f) wenigstens einen oder mehrere der Schritte umfasst:
f1) Positionsgenaues Übergeben der vereinzelten Elektrodensegmente (36.1, 36.2) auf eine Transporteinrichtung (70) mit Heizeinrichtung (68), insbesondere eine Vakuum-Heizwalze (74);
f2) gezieltes Erwärmen des Elektrodensegments (36.1, 36.2);
f3) Anheben der Elektrodensegmente (36.1, 36.2) auf eine sich oberhalb der Schneidebene (64) befindliche Fixierstelle;
f4) Laminieren von Separatorbahn (34.1, 34.2) und Elektrodensegment (36.1, 36.2) zwischen zwei Walzen (74, 76);
f5) Laminieren von Separatorbahn (34.1, 34.2) und Elektrodensegment (36.1, 36.2) zwischen unbeschichteten Hartmetallflächen und/oder zwischen zwei harten Oberflächen;
f6) Reinigen einer von der Transporteinheit (62) abgehobenen Seite des Elektrodensegments (36.1, 36.2);
f7) Aufpressen der Separatorbahn (34.1, 34.2) mittels einer Laminierwalze (76) auf eine Vakuum-Heizwalze (74) oder temperierte Walze oder extern temperierte Vakuumwalze, die die Elektrodensegmente (36.1, 36.2) transportiert.

6. Monozell-Herstellverfahren zum Herstellen von Monozellen (86) für eine Batterie, wobei die Monozelle (86) jeweils ein Anodensegment, ein Kathodensegment und eine Separatorschicht zwischen dem Anodensegment und dem Kathodensegment sowie wenigstens eine Separatorschicht an einer abgewandten Oberfläche des Anodensegments und/oder des Kathodensegments aufweist, wobei das Monozell-Herstellverfahren die Schritte umfasst:
A) Bereitstellen eines Anodenstrangs mit einer ersten Separatorbahn (34.1) und daran fixierten Anodensegmenten mittels eines Elektrodenstrangbereitstellverfahrens nach einem der voranstehenden Ansprüche, wobei in Schritt a) ein bahnförmiges Anodensubstrat (A) bereitgestellt wird,
B) Bereitstellen eines Kathodenstrangs mit einer zweiten Separatorbahn (34.2) und daran fixierten Kathodensegmenten mittels des Elektrodenstrangbereitstellverfahrens nach einem der voranstehenden Ansprüche, wobei in Schritt a) ein bahnförmiges Kathodensubstrat (K) bereitgestellt wird,
C) Bereitstellen eines Verbundstrangs (88) durch relatives Positionieren und Zusammenfügen des Anodenstrangs und des Kathodenstrangs, so dass die Anodensegmente und Kathodensegmente zueinander ausgerichtet übereinander liegen, und
D) Abschneiden der Monozellen (86) von dem in Schritt C) erhaltenen Verbundstrang.

7. Batteriezellstapelherstellverfahren zum Herstellen eines Zellstapels für eine Batterie, umfassend Durchführen des Monozell-Herstellverfahrens nach Anspruch 6 und Aufstapeln der dadurch hergestellten Monozellen (86) zu einem Zellstapel (22).

8. Elektrodenstrangbereitstellvorrichtung (28.1, 28.2) zum Bereitstellen eines Elektrodenstrangs (32.1, 32.2), der eine Separatorbahn (34.1, 34.2) und daran mit Abstand zueinander angebrachte Elektrodensegmente (36.1, 36.2) aufweist, umfassend:
eine Elektrodensubstratbereitstelleinrichtung (38.1, 38.2) zum Bereitstellen eines bahnförmigen Elektrodensubstrats (50.1, A; 50.2, K);
ein Transportsystem (40.1, 40.2), das entlang einer Führungsbahn (60) einzeln, unabhängig voneinander bewegbare Transporteinheiten (62) aufweist, wobei das Transportsystem (40.1, 40.2) dazu eingerichtet ist, das von der Elektrodensubstratbereitstelleinrichtung (38.1, 38.2) bereitgestellte bahnförmige Elektrodensubstrat (50.1, 50.2) aufzunehmen und eben entlang einer Schneidebene (64) zu bewegen;
eine Schneideinrichtung (42.1, 42.2) zum Schneiden des Elektrodensubstrats (50.1, A; 50.2, K) entlang einer ein- oder zweidimensional in der Schneidebene (64) verlaufenden Schneidkontur, um Elektrodensegmente (36.1, 36.2) von dem Elektrodensubstrat (50.1, A; 50.2, K) abzuschneiden;
eine Separatorbahnbereitstelleinrichtung (44.1, 44.2) zum Bereitstellen einer Separatorbahn (34.1, 34.2);
eine Aufbring- und Fixiereinrichtung (46.1, 46.2) zum Aufbringen und Fixieren von mittels des Transportsystems (40.1, 40.2) relativ zueinander positioniert angelieferten Elektrodensegmente (36.1, 36.2) auf der Separatorbahn (34.1, 34.2); und eine Steuerung (48.1, 48.2), die dazu eingerichtet ist, die Elektrodenstrangbereitstellvorrichtung (28.1, 28.2) zum Durchführen des Elektrodenstrangbereitstellverfahrens nach einem der Ansprüche 1 bis 5 anzusteuern.

9. Elektrodenstrangbereitstellvorrichtung (28.1, 28.2) nach Anspruch 8, **dadurch gekennzeichnet, dass** das Transportsystem (40.1, 40.2)
9.1 Transporteinheiten (62) mit austauschbaren Warenträgern aufweist, um durch Austausch von Warenträgern das Transportsystem (40.1, 40.2) an unterschiedliche Elektrodensegmentformate anzupassen; und/oder
9.2 dazu eingerichtet ist, das Elektrodensubstrat in der bahnförmigen und/oder der vereinzelten Form gezielt mittels Vakuums an den einzelnen Transporteinheiten (62) zum Transportieren und Schneiden festzuhalten; und/oder
9.3 als Software ausgebildete Mittel zum Einstellen eines Abstands zwischen abgeschnittenen Elektrodensegmenten (36.1, 36.2) mittels Relativbewegung der Transporteinheiten (62), um die Elektrodensegmente (36.1, 36.2) relativ zueinander zu positionieren, aufweist.

10. Elektrodenstrangbereitstellvorrichtung (28.1, 28.2) nach Anspruch 8 oder 9, **dadurch gekennzeichnet, dass** die Schneideinrichtung (42.1, 42.2) eingerichtet ist zum:
10.1 Schneiden auf einer ebenen Oberfläche; und/oder
10.2 Schneiden entlang einer ebenen Schneidkontur zum Formen von Seitenrändern des Elektrodensegments (36.1, 36.2);
10.3 Schneiden mittels eines gelenkten Laserstrahls;
10.4 Ausschneiden von Ableiterfahnen an wenigstens einem Seitenrand des Elektrodensegments (36.1, 36.2);
10.5 Durchführen eines zweidimensionalen Laserschnitts innerhalb der Schneidebene (64).

11. Elektrodenstrangbereitstellvorrichtung nach einem der Ansprüche 8 bis 10, **dadurch gekennzeichnet, dass** die Aufbring- und Fixiereinrichtung (46.1, 46.2) wenigstens eine oder mehrere der folgenden Einheiten aufweist:
11.1 eine Heizeinrichtung (68) zum gezielten Erwärmen der Elektrodensegmente (36.1, 36.2);
11.2 eine Transporteinrichtung (70) zum Transportieren und Abheben der relativ zueinander positionierten Elektrodensegmente (36.1, 36.2) von den Transporteinheiten (62) zu einer Laminierstelle (72);
11.3 eine Vakuum-Heizwalze (74) oder temperierte Walze oder extern temperierte Vakuum-Walze;
11.4 eine vorzugsweise unbeschichtete Laminierwalze (76);
11.5 eine Presseinrichtung (78).

12. Monozell-Herstellvorrichtung (24), umfassend eine erste Elektrodenstrangbereitstelleinrichtung (28.1) nach einem der Ansprüche 8 bis 11 zum Bereitstellen eines mit Anodensegmenten als Elektrodensegmente (36.1) versehenen Anodenstrangs, eine zweite Elektrodenstrangbereitstelleinrichtung (28.2) nach einem der Ansprüche 8 bis 11 zum Bereitstellen eines mit Kathodensegmenten als Elektrodensegmente (36.2) versehenen Anodenstrangs, eine Verbundstrangbereitstelleinrichtung (30), die dazu eingerichtet ist, den Anodenstrang und den Kathodenstrang zu einem Verbundstrang (88) mit zueinander ausgerichtet übereinander liegenden Anoden- und Kathodensegmenten zu verbinden, und eine Vereinzelungseinrichtung (90) zum Vereinzeln von Monozellen (86) durch Abschneiden von dem Verbundstrang (88).

13. Zellstapelherstellvorrichtung (20), umfassend eine Monozell-Herstellvorrichtung (24) nach Anspruch 12 und eine Stapeleinrichtung (26) zum Stapeln mehrerer durch die Monozell-Herstellvorrichtung (24) hergestellter Monozellen (86) zu einem Zellstapel (22).

14. Steuerung (48.1, 48.2, 80) für eine Vorrichtung (28.1, 28.2, 24, 20) nach einem der Ansprüche 8 bis 13, dazu eingerichtet, die Vorrichtung (28.1, 28.2, 24, 20) zum Durchführen des Verfahrens nach einem der Ansprüche 1 bis 7 anzusteuern.

15. Computerprogramm, umfassend Anweisungen, die eine Vorrichtung (28.1, 28.2, 24, 20) nach einem der Ansprüche 8 bis 13 dazu veranlassen, das Verfahren nach einem der Ansprüche 1 bis 7 durchzuführen.

## Claims

1. Electrode string providing method for providing an electrode string (32.1, 32.2) which has a separator web (34.1, 34.2) and electrode segments (36.1, 36.2) attached thereto at a distance from one another, wherein the electrode string providing method comprises:
a) providing a web-shaped electrode substrate (50,1. 50.2);
b) picking up the web-shaped electrode substrate (50.1, 50.2) by means of a transport system (40.1, 40.2), which has transport units (62) individually, independently of each other movable along a guide track (60), and moving the electrode substrate (50.1, 50.2) in a planar manner along a cutting plane (64);
c) cutting the web-shaped electrode substrate (50.1, 50.2) in the cutting plane (64) in order to cut off electrode segments (36.1, 36.2) which are each arranged individually on one of the transport units (62);
d) adjusting a distance between cut electrode segments (36.1, 36.2) by means of individually controlled movement of the transport units (62) in order to position the electrode segments (36.1, 36.2) relative to one another;
e) providing a separator web (34.1, 34.2);
f) applying and fixing the electrode segments (36.1, 36.2) positioned relative to each other to the separator web (34.1, 34.2).

2. Electrode string providing method according to claim 1, **characterized in that** step b) comprises at least one or more of the steps:
b1) suction of the web-shaped electrode substrate (50.1, 50.2) at a pick-up point (66) on the transport units (62);
b2) transporting the web-shaped electrode substrate (50.1, 50.2) by means of the transport units (62) to a separation point (82) where a flat surface for cutting is provided as a cutting plane (64);
b3) providing transport units (62) with exchangeable product carriers, the product carriers being selected from a range of different product carriers according to the electrode format to be produced;
b4) providing a horizontal cutting plane (64) and horizontal movement along the cutting plane (64);
b5) providing a substantially vertical cutting plane (64) and movement along this cutting plane (64).

3. Electrode string providing method according to any one of the preceding claims, **characterized in that** step c) comprises at least one or more of the steps:
c1) cutting on a flat surface;
c2) cutting along a flat cutting contour to shape side edges of the electrode segment;
c3) cutting by means of a guided laser beam;
c4) cutting out outgoing conductor lugs on at least one side edge of the electrode segment (36.1, 36.2);
c5) carrying out a two-dimensional laser cut within the cutting plane;
c6) cleaning the electrode segment (36.1, 36.2) after cutting.

4. Electrode string providing method according to any one of the preceding claims, **characterized in that** step d) comprises at least one or more of the steps:
d1) adjusting the distance by means of control software;
d2) moving a transport unit (62), which carries an electrode segment (36.1, 36.2) that has just been cut off, away from a cutting or separating point (82);
d3) further transporting the cut-off electrode segment (36.1, 36.2) to a device for carrying out step f);
d4) omitting an electrode segment (36.1, 36.2) at a location on the separator which is otherwise to be occupied by an electrode segment, in order to enable the production of a half-cell, such as in particular an SAS or SKS package, in the process of producing mono cells;
d5) cleaning the cut-off electrode segment (36.1, 36.2) and/or the transport unit (62).

5. Electrode string providing method according to any one of the preceding claims, **characterized in that** step f) comprises at least one or more of the steps:
f1) transferring the separated electrode segments (36.1, 36.2) with positional accuracy to a transport device (70) having a heating device (68), in particular a vacuum heating roller (74);
f2) targeted heating of the electrode segment (36.1, 36.2);
f3) lifting the electrode segments (36.1, 36.2) to a fixing point located above the cutting edge (64);
f4) laminating the separator web (34.1, 34.2) and electrode segment (36.1, 36.2) between two rollers (74, 76);
f5) laminating the separator web (34.1, 34.2) and electrode segment (36.1, 36.2) between uncoated hard metal surfaces and/or between two hard surfaces;
f6) cleaning a side of the electrode segment (36.1, 36.2) lifted off the transport unit (62);
f7) pressing the separator web (34.1, 34.2) onto a vacuum heating roller (74) or tempered roller or externally tempered vacuum roller, which transports the electrode segments (36.1, 36.2), by means of a laminating roller (76).

6. Mono cell production method for producing mono cells (86) for a battery, wherein the mono cell (86) comprises an anode segment, a cathode segment and a separator layer between the anode segment and the cathode segment and at least one separator layer on an averted surface of the anode segment and/or the cathode segment, the mono cell production method comprising the steps of:
A) providing an anode string with a first separator web (34.1) and anode segments fixed thereto by means of an electrode string providing method according to any one of the preceding claims, wherein a web-shaped anode substrate (A) is provided in step a),
B) providing a cathode string with a second separator web (34.2) and cathode segments fixed thereto by means of the electrode string providing method according to any one of the preceding claims, wherein a web-shaped cathode substrate (K) is provided in step a),
C) providing a composite string (88) by relatively positioning and joining the anode string and the cathode string so that the anode segments and cathode segments lie on top of each other in alignment, and
D) cutting the mono cells (86) from the composite string obtained in step C).

7. Battery cell stack production method for producing a cell stack for a battery, the method comprising carrying out the mono cell production method according to claim 6 and stacking the mono cells (86) thus produced to form a cell stack (22).

8. Electrode string providing apparatus (28.1, 28.2) for providing an electrode string (32.1, 32.2) which has a separator web (34.1, 34.2) and electrode segments (36.1, 36.2) attached thereto at a distance from one another, the apparatus comprising:
an electrode substrate providing device (38.1, 38.2) for providing a web-shaped electrode substrate (50.1, A; 50.2, K);
a transport system (40.1, 40.2) comprising transport units (62) which can be moved individually, independently of each other along a guide track (60), the transport system (40.1, 40.2) being configured to pick up the web-shaped electrode substrate (50.1, 50.2) provided by the electrode substrate providing device (38.1, 38.2) and to move it along a cutting plane (64);
a cutting device (42.1, 42.2) for cutting the electrode substrate (50.1, A; 50.2, K) along a cutting contour extending one- or two-dimensionally in the cutting plane (64) in order
to cut electrode segments (36.1, 36.2) from the electrode substrate (50.1, A; 50.2, K); a separator web providing device (44.1, 44.2) for providing a separator web (34.1, 34.2);
an applying and fixing device (46.1, 46.2) for applying and fixing electrode segments (36.1, 36.2) delivered by means of the transport system (40.1, 40.2) to the separator web (34. 1, 34.2) in a manner positioned relative to one another; and a controller (48.1, 48.2) configured to control the electrode string providing apparatus (28.1, 28.2) for carrying out the electrode string providing method according to any one of claims 1 to 5.

9. Electrode string providing apparatus (28.1, 28.2) according to claim 8, **characterized in that** the transport system (40.1, 40.2)
9.1 comprises transport units (62) with exchangeable product carriers in order to adapt the transport system (40.1, 40.2) to different electrode segment formats by exchanging product carriers; and/or
9.2 is configured to hold the electrode substrate in the web-shaped and/or separated form on the individual transport units (62) in a targeted manner by means of vacuum, for transporting and cutting; and/or
9.3 comprises means designed as software for adjusting a distance between cut electrode segments (36.1, 36.2) by means of relative movement of the transport units (62) in order to position the electrode segments (36.1, 36.2) relative to one another.

10. Electrode string providing apparatus (28.1, 28.2) according to claim 8 or 9, **characterized in that** the cutting device (42.1, 42.2) is configured for:
10.1 cutting on a flat surface; and/or
10.2 cutting along a flat cutting contour to shape side edges of the electrode segment (36.1, 36.2);
10.3 cutting by means of a guided laser beam;
10.4 cutting out outgoing conductor lugs on at least one side edge of the electrode segment (36.1, 36.2);
10.5 carrying out a two-dimensional laser cut within the cutting plane (64).

11. Electrode string providing apparatus according to any one of claims 8 to 10, **characterized in that** the applying and fixing device (46.1, 46.2) comprises at least one or more of the following units:
11.1 a heating device (68) for selectively heating the electrode segments (36.1, 36.2);
11.2 a transport device (70) for transporting and lifting the electrode segments (36.1, 36.2), which are positioned relative to one another, from the transport units (62) to a laminating point (72);
11.3 a vacuum heating roller (74) or tempered roller or externally tempered vacuum roller;
11.4 a preferably uncoated laminating roller (76);
11.5 a pressing device (78).

12. Mono cell production apparatus (24), comprising a first electrode string providing device (28.1) according to any one of claims 8 to 11 for providing an anode string provided with anode segments as electrode segments (36.1), a second electrode string providing device (28.2) according to any one of claims 8 to 11 for providing an anode string provided with cathode segments as electrode segments (36. 2), a composite string providing device (30) configured to connect the anode string and the cathode string to form a composite string (88) with anode and cathode segments superimposed in alignment with each other, and a separating device (90) for separating mono cells (86) by cutting them from the composite string (88).

13. Cell stack production apparatus (20), comprising a mono cell production apparatus (24) according to claim 12 and a stacking device (26) for stacking a plurality of mono cells (86) produced by the mono cell production apparatus (24) to form a cell stack (22).

14. Controller (48.1, 48.2, 80) for a device (28.1, 28.2, 24, 20) according to any one of claims 8 to 13, arranged to control the device (28.1, 28.2, 24, 20) for carrying out the method according to any one of claims 1 to 7.

15. Computer program comprising instructions that cause a device (28.1, 28.2, 24, 20) according to any one of claims 8 to 13 to perform the method according to any one of claims 1 to 7.

## Revendications

1. Procédé de fourniture d'un faisceau d'électrodes pour fournir un faisceau d'électrodes (32.1, 32.2) qui comporte une bande séparatrice (34.1, 34.2) et des segments d'électrodes (36.1, 36.2) fixés à celle-ci à une certaine distance les uns des autres, le procédé de fourniture d'un faisceau d'électrodes comprenant:
a) la fourniture d'un substrat d'électrode en forme de bande (50.1, 50.2);
b) le prélèvement du substrat d'électrode en forme de bande (50.1, 50.2) au moyen d'un système de transport (40.1, 40.2) qui comporte des unités de transport (62) pouvant être déplacées individuellement le long d'une voie de guidage (60), et le déplacement du substrat d'électrode (50.1, 50.2) de manière plane le long d'un plan de coupe (64);
c) découper le substrat d'électrode en forme de bande (50.1, 50.2) dans le plan de coupe (64) afin de découper des segments d'électrode (36.1, 36.2) qui sont chacun disposés individuellement sur l'une des unités de transport (62);
d) ajuster une distance entre les segments d'électrode coupés (36.1, 36.2) au moyen d'un mouvement relatif des unités de transport (62) afin de positionner les segments d'électrode (36.1, 36.2) les uns par rapport aux autres;
e) fournir une bande séparatrice (34.1, 34.2);
f) appliquer et fixer les segments d'électrode (36.1, 36.2) positionnés les uns par rapport aux autres sur la bande séparatrice (34.1, 34.2).

2. Procédé de fourniture d'un faisceau d'électrodes selon la revendication 1, **caractérisé en ce que** l'étape b) comprend au moins une ou plusieurs des étapes suivantes:
b1) aspiration du substrat d'électrode en forme de bande (50.1, 50.2) à un point de prélèvement (66) sur les unités de transport (62);
b2) le transport du substrat d'électrode en forme de bande (50.1, 50.2) au moyen des unités de transport (62) vers un point de séparation (82) où une surface plane pour la découpe est prévue comme plan de découpe (64);
b3) la fourniture d'unités de transport (62) avec des supports de produit interchangeables, les supports de produit étant sélectionnés parmi une gamme de supports de produit différents en fonction du format d'électrode à produire;
b4) prévoir un plan de coupe horizontal (64) et un mouvement horizontal le long du plan de coupe (64);
b5) prévoir un plan de coupe sensiblement vertical (64) et un mouvement le long de ce plan de coupe (64).

3. Procédé de fourniture d'un faisceau d'électrodes selon l'une quelconque des revendications précédentes, **caractérisé en ce que** l'étape c) comprend au moins une ou plusieurs des étapes suivantes:
c1) découper sur une surface plane;
c2) découper le long d'un contour de découpe plat pour former des bords latéraux du segment d'électrode;
c3) découper à l'aide d'un faisceau laser guidé;
c4) découper des oreilles de parafoudre sur au moins un bord latéral du segment d'électrode (36.1, 36.2);
c5) réalisation d'une découpe laser bidimensionnelle dans le plan de découpe;
c6) nettoyage du segment d'électrode (36.1, 36.2) après la découpe.

4. Procédé de fourniture d'un faisceau d'électrodes selon l'une quelconque des revendications précédentes, **caractérisé en ce que** l'étape d) comprend au moins une ou plusieurs des étapes suivantes:
d1) réglage de la distance au moyen d'un logiciel de commande;
d2) déplacer une unité de transport (62), qui transporte un segment d'électrode (36.1, 36.2) qui vient d'être découpé, loin d'un point de découpe ou de séparation (82);
d3) transporter ensuite le segment d'électrode découpé (36.1, 36.2) vers un dispositif pour réaliser l'étape f);
d4) omettre un segment d'électrode (36.1, 36.2) à un emplacement sur le séparateur qui doit autrement être occupé par un segment d'électrode afin de permettre la production d'une demi-cellule, telle qu'en particulier un ensemble SAS ou SKS, dans le processus de production de cellules mono;
d5) nettoyer le segment d'électrode coupé (36.1, 36.2) et/ou l'unité de transport (62).

5. Procédé de fourniture d'un faisceau d'électrodes selon l'une quelconque des revendications précédentes, **caractérisé en ce que** l'étape f) comprend au moins une ou plusieurs des étapes suivantes:
f1) transférer les segments d'électrode séparés (36.1, 36.2) avec une précision de positionnement vers un dispositif de transport (70) comportant un dispositif de chauffage (68), en particulier un rouleau chauffant sous vide (74);
f2) chauffer de manière ciblée le segment d'électrode (36.1, 36.2);
f3) le levage des segments d'électrode (36.1, 36.2) vers un point de fixation situé au-dessus du plan de coupe (64);
f4) le laminage de la bande séparatrice (34.1, 34.2) et du segment d'électrode (36.1, 36.2) entre deux rouleaux (74, 76);
f5) laminage de la bande séparatrice (34.1, 34.2) et du segment d'électrode (36.1, 36.2) entre des surfaces en métal dur non revêtues et/ou entre deux surfaces dures;
f6) nettoyage d'un côté du segment d'électrode (36.1, 36.2) soulevé de l'unité de transport (62);
f7) presser la bande séparatrice (34.1, 34.2) sur un rouleau chauffant sous vide (74) ou un rouleau tempéré ou un rouleau sous vide tempéré de l'extérieur, qui transporte les segments d'électrode (36.1, 36.2), au moyen d'un rouleau de laminage (76).

6. Procédé de fabrication de mono-cellules (86) pour une batterie, dans lequel la mono-cellule (86) comprend un segment d'anode, un segment de cathode et une couche de séparateur entre le segment d'anode et le segment de cathode et au moins une couche de séparateur sur une surface détournée du segment d'anode et/ou du segment de cathode, le procédé de fabrication de mono-cellules comprenant les étapes suivantes:
A) fournir un faisceau d'anodes avec une première bande séparatrice (34.1) et des segments d'anode fixés à celle-ci au moyen d'un procédé de fourniture d'un faisceau d'électrodes selon l'une quelconque des revendications précédentes, dans lequel un substrat d'anode en forme de bande (A) est fourni à l'étape a),
B) fournir un faisceau de cathode avec une deuxième bande séparatrice (34.2) et des segments de cathode fixés à celle-ci au moyen du procédé de fourniture d'un faisceau d'électrodes selon l'une quelconque des revendications précédentes, dans lequel un substrat cathodique (K) en forme de bande est fourni à l'étape a),
C) fournir un faisceau composite (88) en positionnant et en joignant de manière relative le faisceau d'anodes et le faisceau de cathodes de sorte que les segments d'anodes et les segments de cathodes se trouvent les uns au-dessus des autres en alignement, et
D) découper les mono-cellules (86) faisceau composite obtenue à l'étape C).

7. Procédé de fabrication d'un empilement de cellules de batterie pour produire un empilement de cellules pour une batterie, le procédé comprenant la mise en œuvre du procédé de fabrication de mono-cellules selon la revendication 6 et l'empilement des mono-cellules (86) ainsi produites pour former un empilement de cellules (22).

8. Dispositif de fourniture d'un faisceau d'électrodes (28.1, 28.2) pour fournir un faisceau d'électrodes (32.1, 32.2) qui comporte une bande séparatrice (34.1, 34.2) et des segments d'électrodes (36.1, 36.2) fixés à celle-ci à une certaine distance les uns des autres, le dispositif comprenant:
un dispositif de fourniture de substrat d'électrode (38.1, 38.2) pour fournir un substrat d'électrode en forme de bande (50.1, A; 50.2, K);
un système de transport (40.1, 40.2) comprenant des unités de transport (62) qui peuvent être déplacées individuellement le long d'une voie de guidage (60), le système de transport (40.1, 40.2) étant configuré pour saisir le substrat d'électrode en forme de bande (50.1, 50.2) fourni par le dispositif de fourniture de substrat d'électrode (38.1, 38.2) et pour le déplacer le long d'un plan de coupe (64);
un dispositif de découpe (42.1, 42.2) pour découper le substrat d'électrode (50.1, A; 50.2, K) le long d'un contour de découpe s'étendant de manière unidimensionnelle ou bidimensionnelle dans le plan de découpe (64) afin de découper des segments d'électrode (36.1, 36.2) à partir du substrat d'électrode (50.1, A; 50.2, K);
un dispositif d'alimentation en bande de séparation (44.1, 44.2) pour fournir une bande de séparation (34.1, 34.2) ;
un dispositif d'application et de fixation (46.1, 46.2) pour appliquer et fixer des segments d'électrode (36.1, 36.2) délivrés au moyen du système de transport (40.1, 40.2) à la bande de séparation (34.1, 34.2) de manière à ce qu'ils soient positionnés les uns par rapport aux autres; et un dispositif de commande (48.1, 48.2) configuré pour commander le dispositif de fourniture d'un faisceau d'électrodes (28.1, 28.2) afin de mettre en œuvre le procédé de fourniture d'un faisceau d'électrodes selon l'une quelconque des revendications 1 à 5.

9. Dispositif de fourniture d'un faisceau d'électrodes (28.1, 28.2) selon la revendication 8, **caractérisé en ce que** le système de transport (40.1, 40.2)
9.1 comprend des unités de transport (62) avec des supports de produits interchangeables afin d'adapter le système de transport (40.1, 40.2) à différents formats de segments d'électrodes en échangeant les supports de produits; et/ou
9.2 est configuré pour maintenir le substrat d'électrode sous forme de bande et/ou séparée sur les unités de transport individuelles (62) de manière ciblée au moyen d'un vide, pour le transport et la découpe; et/ou
9.3 comprend des moyens conçus sous forme de logiciel pour ajuster une distance entre des segments d'électrode coupés (36.1, 36.2) au moyen d'un mouvement relatif des unités de transport (62) afin de positionner les segments d'électrode (36.1, 36.2) les uns par rapport aux autres.

10. Dispositif de fourniture d'un faisceau d'électrodes (28.1, 28.2) selon la revendication 8 ou 9, **caractérisé en ce que** le dispositif de découpe (42.1, 42.2) est configuré pour:
10.1 découper sur une surface plane; et/ou
10.2 découper le long d'un contour de coupe plat pour former des bords latéraux du segment d'électrode (36.1, 36.2);
10.3 découper au moyen d'un faisceau laser guidé;
10.4 découper des oreilles de parafoudre sur au moins un bord latéral du segment d'électrode (36.1, 36.2);
10.5 réaliser une découpe laser bidimensionnelle dans le plan de découpe (64).

11. Dispositif de fourniture d'un faisceau d'électrodes selon l'une quelconque des revendications 8 à 10, **caractérisé en ce que** le dispositif d'application et de fixation (46.1, 46.2) comprend au moins une ou plusieurs des unités suivantes:
11.1 un dispositif de chauffage (68) pour chauffer de manière cible les segments d'électrode (36.1, 36.2);
11.2 un dispositif de transport (70) pour transporter et soulever les segments d'électrode (36.1, 36.2), qui sont positionnés les uns par rapport aux autres, depuis les unités de transport (62) vers un point de laminage (72);
11.3 un rouleau chauffant sous vide (74) ou un rouleau tempéré ou un rouleau sous vide tempéré extérieur;
11.4 un rouleau de laminage (76) de préférence non revêtu;
11.5 un dispositif de pressage (78).

12. Dispositif de fabrication de mono-cellules (24), comprenant un premier dispositif de fourniture d'un faisceau d'électrodes (28.1) selon l'une quelconque des revendications 8 à 11 pour fournir un faisceau d'anodes pourvue de segments d'anodes en tant que segments d'électrodes (36.1), un deuxième dispositif de fourniture d'un faisceau d'électrodes (28.2) selon l'une quelconque des revendications 8 à 11 pour fournir un faisceau d'anodes pourvue de segments de cathodes en tant que segments d'électrodes (36.2), un dispositif de fourniture d'un faisceau composite (30) configuré pour connecter le faisceau d'anodes et le faisceau de cathodes afin de former un faisceau composite (88) avec des segments d'anodes et de cathodes superposés en alignement les uns avec les autres, et un dispositif de séparation (90) pour séparer les mono-cellules (86) en les coupant du faisceau composite (88).

13. Dispositif de fabrication d'empilement de cellules (20), comprenant un dispositif de fabrication de mono-cellules (24) selon la revendication 12 et un dispositif d'empilage (26) pour empiler une pluralité de mono-cellules (86) produites par le dispositif de fabrication de mono-cellules (24) afin de former un empilement de cellules (22).

14. Dispositif de commande (48.1, 48.2, 80) pour un dispositif (28.1, 28.2, 24, 20) selon l'une quelconque des revendications 8 à 13, agencé pour commander le dispositif (28.1, 28.2, 24, 20) afin de mettre en oeuvre le procédé selon l'une quelconque des revendications 1 à 7.

15. Programme informatique comprenant des instructions qui amènent un dispositif (28.1, 28.2, 24, 20) selon l'une quelconque des revendications 8 à 13 à exécuter le procédé selon l'une quelconque des revendications 1 à 7.
